# FASCICULE DE BREVET EUROPEEN

(11) **EP 1 038 727 B1**
(45) Date de publication et mention de la délivrance du brevet: **04.01.2006**
(21) Numéro de dépôt: 00400592.2
(22) Date de dépôt: 06.03.2000
(51) Int. Cl.: B60Q 1/115

(54) **Dispositif de correction d'assiette à câblage simplifié pour véhicule automobile**
Vorrichtung mit vereinfachten Verdrahtungen zur Lageregelung eines Fahrzeuges
Device with simplified wirings for level control of a vehicle

(30) Priorité: 24.03.1999 FR 9903662
(43) Date de publication de la demande: 27.09.2000
(73) Titulaire: VALEO VISION, 93012 Bobigny Cédex (FR)
(72) Inventeur: Leleve, Joel, 93800 Epinay S/Seine (FR)
(74) Mandataire: Lemaire, Marc

(56) Documents cités:
- EP-A- 0 430 760
- DE-A- 3 839 427
- DE-A- 19 633 482

## Description

La présente invention concerne les dispositifs de correction automatique d'assiette, capables de faire varier l'orientation en site des projecteurs d'un véhicule en fonction des variations de l'assiette de celui-ci.

De tels dispositifs sont bien connus (par exemple DE 3839427 ou DE 19633482) en particulier dans le domaine automobile. lls mettent généralement en oeuvre deux capteurs de hauteur associés respectivement aux essieux avant et arrière du véhicule et reliés à des moyens de calcul de l'assiette du véhicule. Ces moyens de calcul d'assiette commandent à leur tour l'orientation des réflecteurs des projecteurs du véhicule, qui sont montés mobiles, de manière à adapter la direction d'émission des faisceaux lumineux à l'assiette du véhicule.

La correction d'orientation effectuée par de tels dispositifs peut s'effectuer selon deux modes différents :
- correction d'assiette statique, dans laquelle un signal d'assiette instantané fourni par les capteurs est débarrassé de toutes ses composantes transitoires, pour obtenir un signal représentatif seulement de la charge du véhicule,
- correction d'assiette dynamique, dans laquelle il est tenu compte instantanément des variations d'assiette dues notamment aux accélérations, décélérations et virages du véhicule pour modifier en temps réel la hauteur des faisceaux d'éclairage.

Les dispositifs connus effectuent ainsi une correction statique à laquelle peut se superposer pour les modèles les plus perfectionnés une correction dynamique, des moyens élaborés de filtrage du signal étant alors associés aux moyens de calcul d'assiette du véhicule.

Un point commun aux architectures des dispositifs connus, qu'ils effectuent une correction dynamique ou non, est que les deux capteurs situés respectivement à l'avant et à l'arrière du véhicule, sont reliés chacun par un conducteur électrique respectif aux moyens de calcul d'assiette. Ceci constitue un inconvénient étant donné que les constructeurs automobiles cherchent actuellement à réduire au maximum le nombre et la longueur des câbles, pour réduire la complexité des configurations des câblages et diminuer les prix de revient des véhicules.

Le but de l'invention est de permettre de réaliser un dispositif de correction d'orientation de faisceaux lumineux d'un ou plusieurs projecteurs d'un véhicule, notamment automobile, dans lequel le nombre de conducteur électrique est réduit.

Un autre but de l'invention est de permettre en outre d'utiliser des capteurs standards pour la mise en oeuvre de tels dispositifs.

Afin d'atteindre ces buts, l'invention propose un dispositif de correction de l'orientation d'au moins un projecteur d'un véhicule notamment automobile en fonction des variations d'assiette de celui-ci, le dispositif comprenant au moins deux capteurs aptes à engendrer chacun un signal élémentaire, et des moyens de traitement des signaux élémentaires engendrés par les capteurs afin d'élaborer une information d'assiette du véhicule, et au moins un actionneur associé à un projecteur du véhicule pour effectuer une correction d'orientation de faisceau en fonction de ladite information d'assiette, dispositif caractérisé en ce qu'il comprend un câble conducteur unique reliant les capteurs entre eux et un conducteur unique reliant les capteurs auxdits moyens de traitement et appliquant à ces derniers un signal combinant les signaux élémentaires engendrés par les capteurs.

Des aspects préférés, mais non limitatifs du dispositif selon l'invention sont les suivants :
- ledit câble conducteur reliant les capteurs entre eux et ledit conducteur reliant les capteurs aux moyens de traitement constituent un bus unique sur lequel les signaux élémentaires sont combinés,
- un premier desdits moyens capteurs transmet son signal élémentaire à un deuxième desdits moyens capteurs auquel sont associés des moyens de combinaison des signaux élémentaires issus des moyens capteurs respectifs, ledit deuxième moyen capteur délivrant en sortie un signal combinant les signaux élémentaires,
- chaque capteur est distinct des moyens de traitement,
- les capteurs délivrent chacun un signal de fréquence fixe et de rapport cyclique variable, représentatif de la mesure délivrée par les capteurs,
- il comporte deux capteurs associés respectivement à un essieu avant et à un essieu arrière du véhicule et le rapport des fréquences des deux capteurs est supérieur à 5,
- le rapport des fréquences des deux capteurs est de l'ordre de 10,
- la fréquence de signal de sortie de chaque capteur est ajustable par des moyens de connectique extérieurs aux capteurs,
- les deux capteurs sont identiques à l'exception de la fréquence de leur signal de sortie,
- la fréquence de signal de sortie de chaque capteur est déterminée en reliant une borne d'entrée du capteur à un potentiel déterminé,
- ledit potentiel déterminé est compris entre les deux valeurs de potentiel qui constituent la tension du réseau de bord du véhicule,
- le signal de sortie de chaque capteur est du type PWM.

D'autres aspects, buts et avantages de l'invention apparaîtront mieux à la lecture de la description suivante d'une forme de réalisation de l'invention, faite en référence aux dessins annexés, sur lesquels :
- la figure 1a est un schéma de principe d'un dispositif de correction de l'orientation des faisceaux des deux projecteurs d'un véhicule automobile selon un premier mode de réalisation connu,
- la figure 1b est un schéma de principe d'un dispositif de correction selon un deuxième mode de réalisation connu,
- la figure 2a est un schéma de principe d'un premier mode de réalisation selon l'invention d'un dispositif de correction,
- la figure 2b est un schéma de principe d'un deuxième mode de réalisation selon l'invention d'un dispositif de correction,
- la figure 3 est une vue partielle du dispositif de la figure 2b, détaillant certains composants,
- la figure 4 montre l'allure des signaux pouvant être délivrés par chacun des deux capteurs du dispositif selon l'invention, ainsi que la résultante délivrée aux moyens de calcul d'assiette de ce dispositif,
- la figure 5 montre l'allure du signal délivré par les deux capteurs d'une variante du dispositif selon l'invention dans laquelle les capteurs sont montés en série sur un bus unique de transmission de données,
- la figure 6 est une représentation des deux capteurs d'un dispositif selon l'invention, faisant apparaître des moyens de connectique permettant de différencier les signaux de sortie des capteurs.

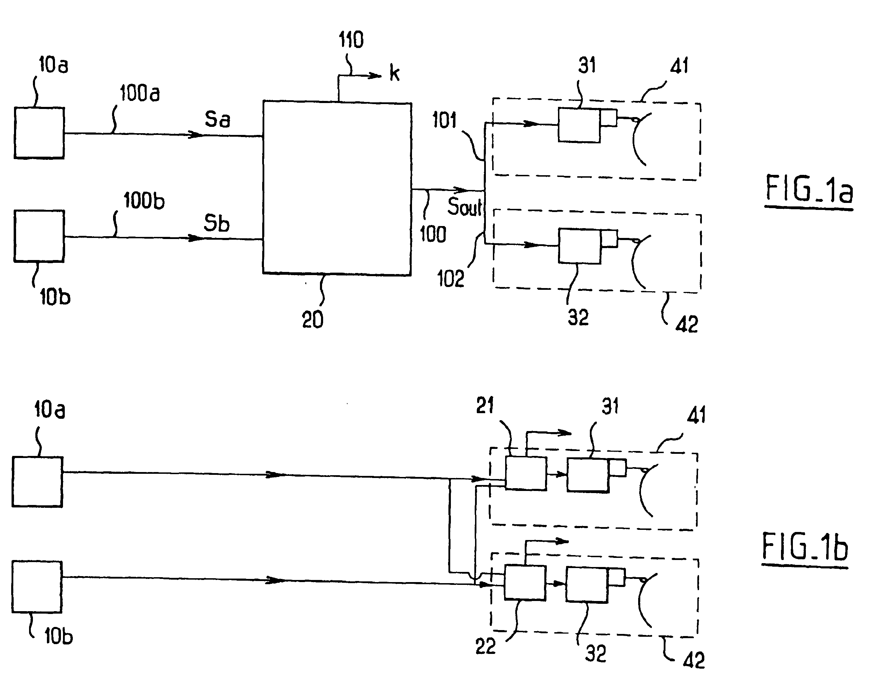

En référence tout d'abord à la figure 1a, on a représenté un dispositif de type connu de correction d'orientation des faisceaux lumineux des projecteurs d'un véhicule automobile. Ce dispositif comprend deux capteurs de hauteur 10a et 10b, associés respectivement aux essieux arrière et avant du véhicule. Ces capteurs délivrent des signaux électriques respectifs Sa, Sb représentatifs de la distance entre leur essieu respectif et la caisse.

Les signaux issus des capteurs 10a et 10b sont transmis par l'intermédiaire de conducteurs électriques respectifs 100a et 100b, à un circuit de calcul 20 pouvant comporter des moyens de filtrage.

Le circuit 20 détermine à partir de ces deux signaux d'entrée Sa et Sb et d'une information d'entraxe entre les essieux, une information d'assiette du véhicule, également sous forme d'un signal électrique Sₒᵤₜ. Le signal Sₒᵤₜ est transmis par l'intermédiaire d'un conducteur électrique 100 à deux actionneurs 31 et 32, intégrés chacun dans un des projecteurs 41, 42 du véhicule, et qui agissent mécaniquement sur le réflecteur de leur projecteur respectif, l'amplitude et le sens du déplacement des réflecteurs étant fonction du signal Sₒᵤₜ.

Un conducteur électrique supplémentaire 110 relie en outre le circuit de calcul 20 à des moyens de contrôle du véhicule (non représentés), auxquels il délivre un signal K de diagnostic sur le fonctionnement du dispositif.

Le circuit de calcul 20 est dans le mode de réalisation connu de la figure 1a situé à l'extérieur des projecteurs, et relié par deux conducteurs différents 101 et 102 à chacun des actionneurs.

Il est également possible selon l'état de la technique connue d'implanter à l'intérieur de chaque projecteur du véhicule 41 et 42 un circuit de calcul respectif 21 et 22, comme représenté sur la figure 1b. Il est alors nécessaire de prévoir deux conducteurs électriques entre chacun des deux capteurs 10a et 10b et chacun des deux circuits de calcul 21 et 22.

Dans les modes de réalisation connus, les deux capteurs 10a et 10b sont généralement de type à sortie PWM qui module le rapport cyclique du signal logique de sortie des capteurs.

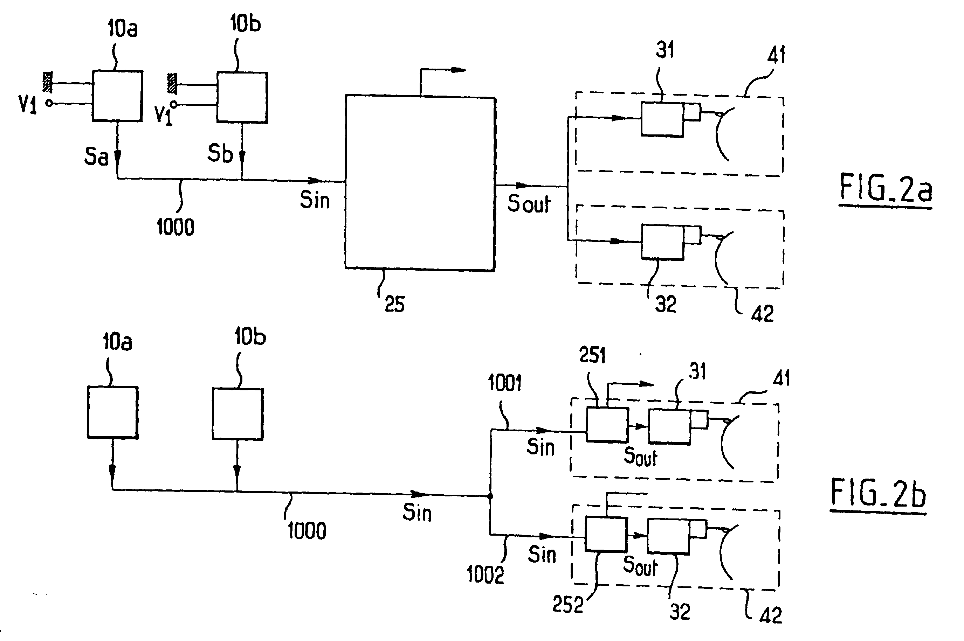

En référence maintenant à la figure 2a, on a représenté l'architecture générale d'un dispositif selon l'invention destiné à la même fonction de correction de l'orientation des faisceaux des deux projecteurs d'un véhicule automobile. Dans la suite de ce texte, les éléments semblables à ceux déjà décrits en référence aux figures 1a et 1b seront référencés de la même manière.

Sur la figure 2a, les deux capteurs 10a et 10b sont, comme dans les dispositifs connus, de type à sortie PWM, et mesurent les hauteurs respectives de caisse au-dessus des essieux arrière et avant

Les capteurs eux-mêmes sont également de type connu, tel que mis en oeuvre dans les dispositifs existants. Chaque capteur est alimenté par une source de tension (représentée ici par les potentiels masse et V1), prélevée dans le véhicule à proximité des capteurs et pouvant correspondre à la tension du réseau de bord du véhicule.

Une caractéristique importante du dispositif selon l'invention réside dans le fait que les deux capteurs 10a et 10b sont ici reliés à un bus unique 1000 de transmission de données, sur lequel les signaux Sa et Sb issus respectivement des capteurs 10a et 10b se combinent pour former le signal Sᵢₙ délivré par le bus 1000 à un circuit 25 de calcul d'assiette. La partie aval de l'architecture de ce dispositif est similaire à celle représentée sur la figure 1a.

Selon une variante de l'invention, il est ici encore possible d'intégrer un circuit de calcul d'assiette respectif 251 et 252 à l'intérieur de chacun des deux projecteurs 41 et 42 du véhicule, comme représenté sur la figure 2b. Ce mode de réalisation de l'invention permet de s'affranchir des questions d'implantation et de support pour un circuit de calcul extérieur aux projecteurs. Dans ce cas, deux conducteurs 1001 et 1002 relient les circuits respectifs 251 et 252 à un point du bus 1000 situé à proximité des projecteurs. Les deux circuits 251 et 252 reçoivent alors chacun le même signal Sᵢₙ et délivrent chacun le même signal Sₒᵤₜ à l'actionneur respectif auquel ils sont associés.

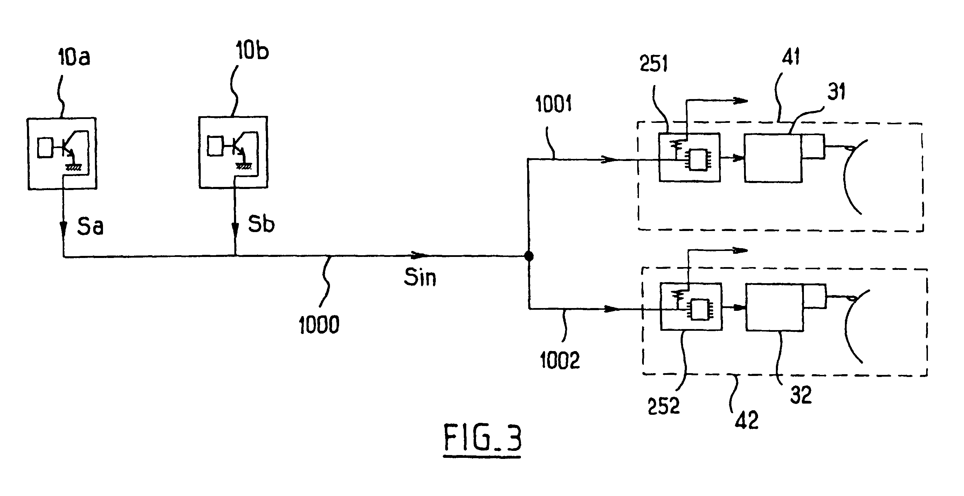

La figure 3 détaille la structure des capteurs 10a et 10b, qui ont chacun une sortie à collecteur ouvert. Les signaux Sa et Sb issus de ces capteurs respectifs se combinent sur le bus 1000 pour former le signal Sᵢₙ=SaxSb, qui est délivré aux circuits de calcul 251 et 252 associés respectivement au projecteur droit 41 et gauche 42. Les deux capteurs 10a et 10b sont identiques, à l'exception des fréquences de leurs signaux de sortie respectifs Sa et Sb, qui sont différentes.

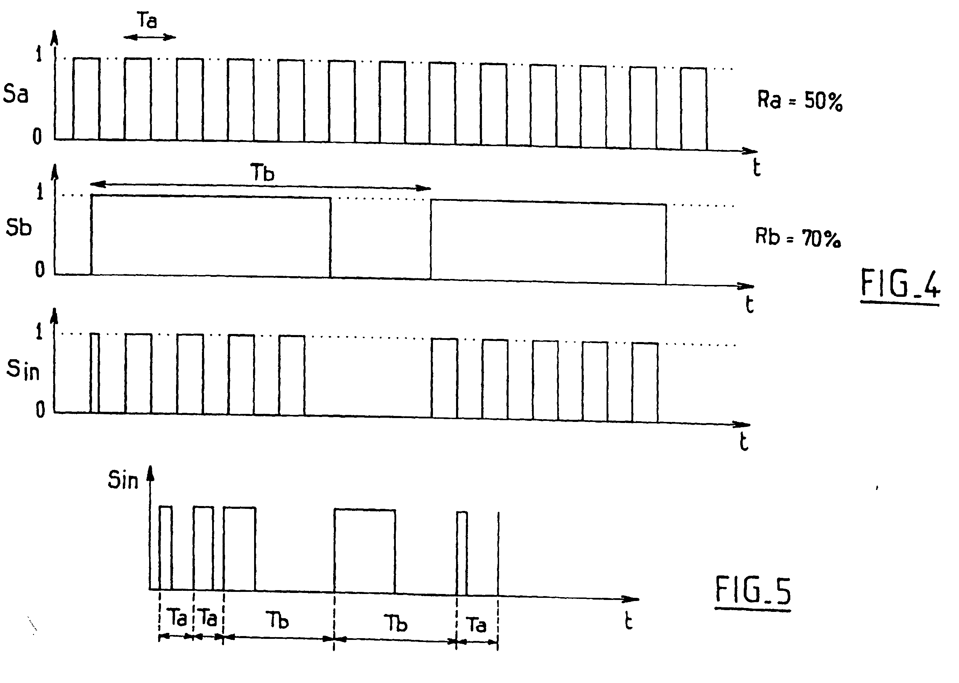

En référence maintenant à la figure 4, on a représenté de haut en bas l'allure des signaux Sa, Sb et Sᵢₙ. Ces signaux sont des signaux rectangulaires pouvant prendre les valeurs « 0 » et « 1 ».

Le signal Sa a une fréquence fixe Fa définissant une période Ta et un rapport cyclique Ra variable, représentatif de la mesure du capteur 10a, ledit rapport Ra étant dans le cas de la figure 4 égal à 50%.

Le signal Sb a quant à lui une fréquence fixe Fb (qui est ici dix fois inférieure à Fa), définissant une période Tb et un rapport cyclique Rb variable représentatif de la mesure délivrée par le capteur 10b, ledit rapport Rb étant dans le cas de la figure 4 égal à 70%.

En choisissant un rapport de fréquence Fa sur Fb assez important (ici de l'ordre de 10) on déduit ainsi du signal Sᵢₙ le rapport cyclique Ra avec exactitude, et le rapport cyclique Rb avec une bonne précision (supérieure à 10%).

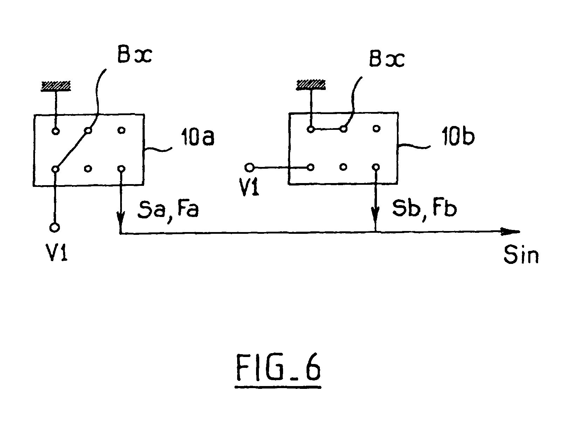

Il est également possible selon l'invention de relier le capteur arrière 10a au capteur avant 10b par l'intermédiaire d'un premier tronçon de bus transmettant une information de hauteur de l'arrière de la caisse du véhicule, le capteur avant étant par ailleurs relié au circuit de calcul d'assiette par un deuxième tronçon de bus qui transmet les deux informations de hauteur de caisse à l'arrière et à l'avant du véhicule. Dans une telle configuration où les deux capteurs sont connectés en série sur un bus unique, le signal Sᵢₙ transmis au circuit de calcul peut avoir l'allure représentée sur la figure 5 : sur cette figure, les deux signaux issus des deux capteurs 10a et 10b sont ici encore de type PWM avec deux fréquences Fa et Fb sensiblement différentes, les deux signaux Sa et Sb ne se multipliant pas mais étant multiplexés en se succédant alternativement.

Il est également possible selon l'invention de mettre en oeuvre pour constituer le signal Sᵢₙ toute combinaison de type connu en soi de signaux qui permette de retracer individuellement chacun des signaux constituant ladite combinaison. Dans une telle combinaison, les signaux peuvent être du type PWM ou de tout autre type couramment utilisé.

Il apparaît ainsi que le dispositif selon l'invention permet de relier deux capteurs à un bus unique de transmission de données acheminant la combinaison des signaux issus des différents capteurs à un ou plusieurs circuits de calcul d'assiette. On comprendra que le nombre de capteurs n'est pas limité à deux, mais que le dispositif peut également comporter si besoin des capteurs supplémentaires reliés au bus unique de transmission de données.

La configuration selon l'invention est particulièrement avantageuse en termes de coût lié au câblage et de simplicité de l'implantation et de la maintenance du dispositif.

Un autre avantage de l'invention est que la multiplication de signaux de fréquences sensiblement différentes permet de retracer à partir du signal combiné Sᵢₙ chacun des signaux individuels issus des différents capteurs respectifs, ce qui facilite la détection de défaut de l'un de ces capteurs.

En outre, les modes de réalisation présentés ci-dessus sont destinés à être mis en oeuvre dans le cadre de la correction de l'orientation de faisceaux de projecteurs de véhicules automobiles mais ne nécessitent aucunement l'emploi de capteurs spécifiques comportant une ligne de diagnostic ou d'autres composants spécifiques. Des capteurs standard peuvent donc être mis en oeuvre. La seule différence entre les capteurs réside alors dans les fréquences associées aux signaux de sortie respectifs des capteurs du dispositif.

Les différentes fréquences peuvent être fixées une fois pour toute à la construction du capteur, ou encore être modifiables grâce à des moyens simples de connectique extérieure aux capteurs. Dans ce cas, les capteurs eux-mêmes sont rigoureusement identiques, seules les connexions effectuées sur les éléments de connectique extérieure différant, afin de choisir la fréquence désirée pour le capteur.

La figure 6 représente ainsi schématiquement deux capteurs alimentés chacun par une source V1 (pouvant être la tension positive du réseau de bord du véhicule). Ce sont les connexions effectuées sur le boîtier de chaque capteur qui déterminent la fréquence de pulsation du signal Sa, Sb du capteur : chaque capteur 10a, 10b comprend ainsi une borne Bx qui peut être reliée soit à une source de potentiel V1, soit à la masse. Un circuit logique associé au capteur fixe alors la fréquence du signal de sortie Sa, Sb en fonction du potentiel auquel est reliée la borne Bx.

Sur la figure 6, un premier capteur 10a délivre ainsi un signal Sa à 400 hertz et le deuxième capteur 10b délivre un signal Sb à 50 hertz, ces deux fréquences respectives étant particulièrement bien adaptées au fonctionnement du dispositif de correction selon l'invention.

Bien évidemment, les modes de réalisation décrits ci-dessus ne sont nullement limitatifs. En particulier, il est possible d'associer aux circuits de calcul d'assiette 25, 251, 252 des moyens de filtrage du signal complémentaires.

On notera enfin que le dispositif selon l'invention présente également des qualités de robustesse, car d'une part le nombre de connexions est réduit par rapport aux solutions connues et d'autre part les défauts d'un des capteurs 10a, 10b n'entraînent le défaut du dispositif entier. Il est également possible d'appliquer l'invention à tout ensemble comportant plusieurs capteurs et nécessitant un nombre aussi réduit que possible de liaisons entre les différents composants tout en garantissant la persistance des informations des différents capteurs en fonctionnement lorsque certains des capteurs reliés au même bus de transmissions de données sont défaillants.

## Revendications

1. Dispositif de correction automatique de l'orientation d'au moins un projecteur (41,42) d'un véhicule notamment automobile en fonction des variations d'assiette de celui-ci, le dispositif comprenant au moins deux capteurs (10a, 10b) aptes à engendrer chacun un signal élémentaire (Sa, Sb), des moyens (25, 251, 252) de traitement des signaux élémentaires engendrés par les capteurs afin d'élaborer une information d'assiette du véhicule, et au moins un actionneur (31, 32) associé à un projecteur du véhicule pour effectuer une correction d'orientation de faisceau en fonction de ladite information d'assiette, dispositif **caractérisé en ce qu'**il comprend un câble conducteur unique (1000) reliant les capteurs entre eux et un conducteur unique (1000) reliant les capteurs auxdits moyens de traitement et appliquant à ces derniers un signal (Sᵢₙ) combinant les signaux élémentaires (Sa, Sb) engendrés par les capteurs.

2. Dispositif selon la revendication 1, **caractérisé en ce que** ledit câble conducteur reliant les capteurs entre eux et ledit conducteur reliant les capteurs aux moyens de traitement constituent un bus unique (1000) sur lequel les signaux élémentaires (Sa, Sb) sont combinés.

3. Dispositif selon la revendication 1, **caractérisé en ce qu'**un premier desdits moyens capteurs transmet son signal élémentaire à un deuxième desdits moyens capteurs auquel sont associés des moyens de combinaison des signaux élémentaires issus des moyens capteurs respectifs, ledit deuxième moyen capteur délivrant en sortie un signal combinant les signaux élémentaires.

4. Dispositif selon l'une des revendications 1 à 3, **caractérisé en ce que** chaque capteur est distinct des moyens de traitement (25, 251, 252).

5. Dispositif selon l'une des revendications 1 à 4, **caractérisé en ce que** les capteurs (10a, 10b) délivrent chacun un signal (Sa, Sb) de fréquence fixe (Fa, Fb) et de rapport cyclique variable (Ra, Rb), représentatif de la mesure délivrée par les capteurs.

6. Dispositif selon la revendication 5, **caractérisé en ce qu'**il comporte deux capteurs associés respectivement à un essieu avant et à un essieu arrière du véhicule et le rapport (Fa/Fb) des fréquences des deux capteurs est supérieur à 5.

7. Dispositif selon la revendication 6, **caractérisé en ce que** le rapport des fréquences des deux capteurs est de l'ordre de 10.

8. Dispositif selon l'une des revendications 5 à 7, **caractérisé en ce que** la fréquence de signal de sortie de chaque capteur est ajustable par des moyens de connectique extérieurs aux capteurs.

9. Dispositif selon la revendication 8, **caractérisé en ce que** les deux capteurs sont identiques à l'exception de la fréquence de leur signal de sortie.

10. Dispositif selon la revendication 8 ou 9, **caractérisé en ce que** la fréquence de signal de sortie de chaque capteur est déterminée en reliant une borne d'entrée (Bx) du capteur à un potentiel déterminé.

11. Dispositif selon la revendication 10, **caractérisé en ce que** ledit potentiel déterminé est compris entre les deux valeurs de potentiel qui constituent la tension du réseau de bord du véhicule.

12. Dispositif selon l'une des revendications précédentes, **caractérisé en ce que** le signal de sortie de chaque capteur est du type PWM.

## Patentansprüche

1. Vorrichtung zur automatischen Regelung der Ausrichtung wenigstens eines Scheinwerfers (41, 42) eines Fahrzeugs, insbesondere eines Kraftfahrzeugs, in Abhängigkeit von dessen Lageveränderungen, wobei die Vorrichtung wenigstens zwei Sensoren (10a, 10b), die jeweils ein Grundsignal (Sa, Sb) zu erzeugen vermögen, Mittel (25, 251, 252) zum Verarbeiten der von den Sensoren erzeugten Grundsignale zum Erstellen einer Information über die Niveaulage des Fahrzeugs und wenigstens einen einem Scheinwerfer des Fahrzeugs zugeordneten Steller (31, 32) umfasst, um eine Korrektur der Lichtbündelausrichtung in Abhängigkeit von dieser Niveaulageinformation vorzunehmen,
**dadurch gekennzeichnet, dass** sie ein einziges die Sensoren miteinander verbindendes Leiterkabel (1000) und einen einzigen Leiter (1000) aufweist, der die Sensoren mit den Verarbeitungsmitteln verbindet und an letztere ein Signal (Sᵢₙ) anlegt, das die von den Sensoren erzeugten Grundsignale (Sa, Sb) zusammenfasst.

2. Vorrichtung nach Anspruch 1,
**dadurch gekennzeichnet, dass** das die Sensoren miteinander verbindende Leiterkabel und der die Sensoren mit den Verarbeitungsmitteln verbindende Leiter einen einzigen Bus (1000) bilden, in dem die Grundsignale (Sa, Sb) zusammengefasst sind.

3. Vorrichtung nach Anspruch 1,
**dadurch gekennzeichnet, dass** ein erstes Mittel der Sensormittel sein Grundsignal an ein zweites Mittel der Sensormittel überträgt, dem Mittel zum Zusammenfassen der von den jeweiligen Sensormitteln stammenden Grundsignale zugeordnet sind, wobei das zweite Sensormittel am Ausgang ein die Grundsignale zusammenfassendes Signal abgibt.

4. Vorrichtung nach einem der Ansprüche 1 bis 3,
**dadurch gekennzeichnet, dass** jeder Sensor von den Verarbeitungsmitteln (25, 251, 252) unabhängig ist.

5. Vorrichtung nach einem der Ansprüche 1 bis 4,
**dadurch gekennzeichnet, dass** die Sensoren (10a, 10b) jeweils ein Signal (Sa, Sb) mit konstanter Frequenz (Fa, Fb) und mit variablem Tastverhältnis (Ra, Rb) abgeben, das für die von den Sensoren gelieferte Messung repräsentativ ist.

6. Vorrichtung nach Anspruch 5,
**dadurch gekennzeichnet, dass** sie zwei Sensoren aufweist, die einer Vorderachse bzw. einer Hinterachse des Fahrzeugs zugeordnet sind, und das Verhältnis (Fa/Fb) der Frequenzen der beiden Sensoren größer als 5 ist.

7. Vorrichtung nach Anspruch 6,
**dadurch gekennzeichnet, dass** das Verhältnis der Frequenzen der beiden Sensoren etwa 10 beträgt.

8. Vorrichtung nach einem der Ansprüche 5 bis 7,
**dadurch gekennzeichnet, dass** die Ausgangssignalfrequenz jedes Sensors durch außerhalb der Sensoren angeordnete Anschlussmittel einstellbar ist.

9. Vorrichtung nach Anspruch 8,
**dadurch gekennzeichnet, dass** die beiden Sensoren mit Ausnahme der Frequenz ihres Ausgangssignals identisch sind.

10. Vorrichtung nach Anspruch 8 oder 9,
**dadurch gekennzeichnet, dass** die Ausgangssignalfrequenz jedes Sensors **dadurch** festgelegt wird, dass eine Eingangsklemme (Bx) des Sensors mit einem bestimmten Potenzial verbunden wird.

11. Vorrichtung nach Anspruch 10,
**dadurch gekennzeichnet, dass** das bestimmte Potenzial zwischen den beiden Potenzialwerten liegt, die die Spannung des Bordnetzes des Fahrzeugs bilden.

12. Vorrichtung nach einem der vorhergehenden Ansprüche,
**dadurch gekennzeichnet, dass** das Ausgangssignal jedes Sensors von pulsbreitenmodulierter Art ist.

## Claims

1. Apparatus for the automatic correction of the orientation of at least one headlight (41, 42) for a vehicle, especially a motor vehicle, in response to variations in the attitude of the latter, the apparatus comprising at least two sensors (10a, 10b), each of which is adapted to generate an elementary signal (Sa, Sb), means (25, 251, 252) for processing the elementary signals generated by the sensors whereby to produce an item of information as to the attitude of the vehicle, and at least one actuator (31, 32) associated with a headlight of the vehicle for making a correction of the orientation of the beam as a function of the said attitude information, the apparatus being **characterised in that** it includes a single conductor cable (1000) connecting the sensors together, and a single conductor (1000) connecting the sensors to the said processing means and applying to the latter a signal (Sin) which combines the elementary signals (Sa, Sb) generated by the sensors.

2. Apparatus according to Claim 1, **characterised in that** the said conductor cable connecting the sensors together, and the said conductor connecting the sensors to the processing means, constitute a single bus (1000) on which the elementary signals (Sa, Sb) are combined.

3. Apparatus according to Claim 1, **characterised in that** a first one of the said sensor means transmits its elementary signal to a second one of the said sensor means, with which there are associated means for combining the elementary signals that come from the respective sensor means, the said second sensor means delivering, at its output, a signal which combines the elementary signals.

4. Apparatus according to one of Claims 1 to 3. **characterised in that** each sensor is distinct from the processing means (25, 251, 252).

5. Apparatus according to one of Claims 1 to 4, **characterised in that** each of the sensors (10a, 10b) delivers a signal (Sa, Sb) having a fixed frequency (Fa, Fb) and a variable cyclic ratio (Ra, Rb), representing the measurement given by the sensors.

6. Apparatus according to Claim 5, **characterised in that** it has two sensors, which are associated with, respectively, a front axle and a rear axle of the vehicle, and the ratio (Fa/Fb) of the frequencies of the two sensors is greater than 5.

7. Apparatus according to Claim 5, **characterised in that** the ratio of the frequencies of the two sensors is of the order of 10.

8. Apparatus according to one of Claims 5 to 7, **characterised in that** the output signal frequency of each sensor is adjustable by connection means external to the sensors.

9. Apparatus according to Claim 8, **characterised** din that, apart from their output signal frequency, the two sensors are identical.

10. Apparatus according to Claim 8 or Claim 9, **characterised in that** the output signal frequency of each sensor is determined by connecting an input terminal (Bx) of the sensor to a predetermined potential.

11. Apparatus according to Claim 10, **characterised in that** the said predetermined potential is in the range between the two values of potential that define the voltage of the on-board wiring network of the vehicle.

12. Apparatus according to one of the preceding Claims, **characterised in that** the output signal of each sensor is of the PWM type.
